# FASCICULE DE BREVET EUROPEEN

(11) **EP 2 872 458 B1**
(45) Date de publication et mention de la délivrance du brevet: **31.01.2018**
(21) Numéro de dépôt: 13735320.7
(22) Date de dépôt: 12.07.2013
(51) Int. Cl.: C04B 2/06

(54) **COMPOSE MIXTE CALCIQUE ET MAGNESIEN ET SON PROCEDE DE FABRICATION**
GEMISCHTE CALCIUM- UND MAGNESIUMVERBINDUNG UND VERFAHREN ZUR HERSTELLUNG DAVON
MIXED CALCIUM AND MAGNESIUM COMPOUND AND METHOD FOR PRODUCING SAME

(30) Priorité: 12.07.2012 BE 201200485; 05.09.2012 US 201261696948 P
(43) Date de publication de la demande: 20.05.2015
(73) Titulaire: S.A. Lhoist Recherche et Développement, 1342 Ottignies-Louvain-la-Neuve (BE)
(72) Inventeur: LORGOUILLOUX, Marion, B-7110 Strépy Bracquegnies (BE); LAUDET, Alain, B-5000 Namur (BE)
(74) Mandataire: Gevers Patents
(86) Numéro de dépôt international: PCT/EP2013/064759
(87) Numéro de publication internationale: WO 2014/009508

(56) Documents cités:
- EP-A1- 0 230 139
- EP-A1- 0 623 555
- WO-A1-98/51614
- US-A- 2 224 780
- US-A- 2 912 306
- US-A- 5 422 092
- US-A1- 2006 275 203

## Description

La présente invention se rapporte à un composé mixte calcique et magnésien et son procédé de fabrication.

Des composés mixtes calciques et magnésiens sont divulgués dans les documents US5422092 et EP0623555 qui décrivent des matériaux composites de formule Ca₍₁₋ₓ₎M²⁺x(OH)₂ dans laquelle M peut représenter du magnésium parmi la liste des métaux cités. Ces matériaux composites sont obtenus sous la forme de solution solide d'hydroxyde métallique, par exemple d'hydroxydes de calcium dans lequel, dans la structure cristalline, du Mg ou un autre métal est substitué à un atome de calcium. Inversement, il peut être également obtenu une solution solide d'hydroxyde de magnésium dans lequel des atomes de magnésium sont substitués dans la structure cristalline par des atomes de calcium.

Pour obtenir de tels matériaux composites, le métal par exemple le magnésium est ajouté à une suspension d'hydroxyde de calcium, par exemple une suspension de chaux éteinte, sous forme de chlorure de magnésium dans un autoclave à 120°C perdant 2 heures.

La chaux éteinte est constituée d'un ensemble de particules solides, principalement de di-hydroxyde de calcium de formule Ca(OH)₂, et est le résultat industriel de l'extinction d'une chaux vive avec de l'eau, réaction également appelée hydratation. Ce produit est également connu sous le nom de chaux hydratée. Par la suite, le di-hydroxyde de calcium sera nommé simplement hydroxyde de calcium.

En fonction de l'importance de l'excès d'eau mise en oeuvre, il existe plusieurs possibilités d'obtenir industriellement une chaux éteinte au départ de chaux vive (voir notamment BOYNTON, R.S., Chemistry and technology of lime and limestone, second ed., New-York : Wiley, 1980, xii, pp.327-328). Le mode d'extinction détermine également la forme sous laquelle se présente la chaux éteinte : hydrate sec, pâte, suspension/lait de chaux.

Dans un mode d'extinction « par voie sèche », la quantité d'eau ajoutée est limitée à celle qui est nécessaire à la réaction d'extinction, augmentée de celle perdue en vapeur d'eau en raison du caractère exothermique de la réaction. Dès la sortie de l'hydrateur, le produit obtenu est pulvérulent et comprend en général à la fois moins de 2 % de CaO non hydraté résiduel et moins de 2 % d'humidité, avec un maximum de 4 % d'humidité. Il peut être conditionné et vendu directement, après d'éventuelles étapes de contrôles granulométriques, mais sans aucune étape préalable de séchage et de désagglomération.

Dans une variante de mode d'extinction précédent, l'hydratation peut être réalisée avec un excès d'eau plus important, selon WO 97/14650. Dans ce cas, l'hydrate obtenu contient une humidité de l'ordre de 15 à 30 % en masse. Du fait de cette humidité, la chaux hydratée nécessite une étape de séchage et de désagglomération avant stockage et transport. L'inconvénient d'ajouter une étape de séchage / désagglomération dans la ligne de production est compensé par le fait que l'excès d'eau utilisé pendant la réaction permet de développer la surface spécifique et le volume poreux de l'hydrate qui peut ensuite, grâce à ces caractéristiques, être utilisé dans des applications spécifiques, notamment pour le traitement des gaz acides. Ce mode d'extinction selon WO 97/14650, sera appelé mode d'extinction par « voie quasi-sèche ».

Dans un mode d'extinction « par voie humide », la quantité d'eau ajoutée est en excès très important par rapport à la quantité strictement nécessaire pour la réaction d'extinction. On obtient alors un « lait de chaux », à savoir une suspension aqueuse de particules de chaux éteinte.

Lorsque la quantité d'eau utilisée pour la réaction d'extinction est un peu plus faible, le produit obtenu est pâteux et on parle d'extinction « par voie pâteuse » (*Lime putty,* en anglais).

Dans le présent document, on appellera mode d'extinction « par voie non-humide », les modes d'extinction regroupant les modes d'extinction par voie sèche, par voie quasi-sèche et tout intermédiaire entre les deux (hydrate obtenu avec une humidité comprise entre 2 et 15 %), à l'exclusion des deux modes d'extinction par voie humide et par voie pâteuse.

On entend par chaux vive, une matière solide minérale, dont la composition chimique est principalement de l'oxyde de calcium, CaO. La chaux vive est communément obtenue par calcination de calcaire, principalement constitué de CaCO₃. La chaux vive contient des impuretés, à savoir, des composés tels de l'oxyde de magnésium, MgO, de la silice, SiO₂ ou encore de l'alumine, Al₂O₃, etc..., à hauteur de quelques pour-cents. Il est entendu que ces impuretés sont exprimées sous les formes précitées mais peuvent en réalité apparaître sous des phases différentes. Elle contient également en général quelques pour-cents de CaCO₃ résiduel, appelés incuits.

En plus des gisements de calcaire (carbonate de calcium de formule CaCO₃), il existe des gisements de dolomie (carbonate mixte de calcium et de magnésium de formule CaCO₃.MgCO₃) ou de tout autre carbonate mixte de calcium et magnésium. Tout comme les calcaires, les dolomies ou autre carbonate mixte précité peuvent être calcinés, produisant ainsi de la dolomie vive de formule CaO.MgO ou tout autre oxyde mixte de calcium et magnésium. De la même manière que pour les chaux vives, une réaction d'hydratation va s'amorcer lorsqu'une dolomie vive ou autre oxyde mixte précité est mis en contact avec de l'eau. Toutefois, il est connu que la réactivité de l'oxyde de magnésium est beaucoup plus faible que celle de la chaux vive, très hydrophile, l'hydratation de ces composés vifs s'en trouve beaucoup plus complexe que l'hydratation d'une chaux vive.

Pour cette raison, dans la grande majorité des cas, la dolomie hydratée ou autre hydroxyde mixte de calcium et magnésium produit industriellement en voie sèche est en réalité une dolomie semi-hydratée ou autre hydroxyde mixte précité, contenant une quantité non négligeable de MgO résiduel non hydraté. La dolomie semi-hydratée susdite est généralement représentée par les formules Ca(OH)₂.MgO ou Ca(OH)₂.Mg(OH)₂.MgO selon le taux d'hydratation de l'oxyde de magnésium. Les autres hydroxydes mixtes précités ont des formules du même type, mais avec des rapports molaires calcium/magnésium différents.

Pour palier cette faible réactivité de la dolomie vive ou autre composé vif précité vis-à-vis de l'eau dans le but d'obtenir des produits totalement hydratés (de formule générale aCa(OH)₂.bMg(OH)₂), il est connu d'avoir recours à une quantité d'eau nettement plus importante que la quantité d'eau utilisée pour une extinction par voie sèche et/ou à des températures plus élevées que celles auxquelles ont lieu les réactions d'hydratation standards pour la chaux vive, à un broyage de la dolomie vive ou autre composé vif précité préalablement à son hydratation, voire à une réaction hydrothermale, c'est-à-dire à une hydratation sous pression à haute température (sous vapeur d'eau, 7-13 bars, 115-165 °C) (Boynton, pp325-326). Un produit dolomitique de ce type, totalement hydraté, est connu sous le nom de Type S, terme à opposer à Type N qui représente les hydrates dolomitiques normaux c'est-à-dire partiellement hydratés (OATES, J.A.H., Lime and limestone, Weinheim : Wiley-VCH, 1998, pp. 222-223

Dans tous les cas, ces procédés d'extinction sont complexes et coûteux, avec le risque qu'une partie du MgO ne soit pas bien hydratée.

Qu'il s'agisse de dolomies totalement ou semi-hydratées ou autre hydroxyde mixte précité, le rapport Ca/Mg dans le produit est subi et correspond au rapport molaire Ca/Mg de la dolomie crue de départ ou autre carbonate mixte précité.

Le document EP 0 558 522 au nom de la demanderesse prévoit la production d'un hydroxyde de calcium et de magnésium à partir de dolomie dont le rapport Ca/Mg est par conséquent fixé et proche de 1, qui, pour être totalement hydratée, est d'abord finement broyée puis hydratée avec un excès d'eau (rapport massique entre l'eau, d'une part et CaO et/ou MgO, d'autre part, de 2,5) à haute température (> 80 °C).

Le composé mixte au départ de dolomie présente une surface spécifique supérieure à 35 m²/g et une teneur en humidité inférieure à 50 % en poids. Ce produit est obtenu en présence d'un additif choisi parmi l'éthylène glycol, le diéthylène glycol, le triéthylène glycol, la monoéthanolamine, la diéthanolamine, la triéthanolamine et leurs mélanges. Ce document est par contre muet quant au volume poreux obtenu.

Le document US 3,869,299 divulgue une méthode permettant la production d'une dolomie totalement hydratée à pression atmosphérique. Ce procédé fait appel à un large excès d'eau (hydratation en voie humide donnant lieu à l'obtention d'un lait de dolomie) chaude (50-100 °C, de préférence 90-100 °C) et à l'utilisation d'un additf à base de bore. La durée d'hydratation peut atteindre jusqu'à 10 heures. Le rapport Ca/Mg est subi et systématiquement proche de l'équimolarité puisqu'il s'agit de dolomies naturelles.

L'addition d'un composé à base de bore pendant l'hydratation permet de développer la porosité et la surface spécifique de l'hydroxyde de magnésium seulement, en comparaison d'une hydratation similaire sans ajout de composé à base de bore.

Pour diverses applications, il existe un besoin à l'échelle industrielle en hydrates mixtes de calcium et de magnésium qui soient totalement hydratés, dont la composition (proportion de calcium et de magnésium) est contrôlée et variable et dans lesquels les composés calciques et magnésiens sont intimement combinés. Ces hydrates sont des hydroxydes mixtes de calcium et magnésium, associés à des impuretés du type CaO, CaCO₃, Al₂O₃, SiO₂, Fe₂O₃....

Plus particulièrement, la présente invention se rapporte à un procédé de fabrication d'un composé mixte calcique et magnésien comprenant une extinction de chaux vive par un milieu aqueux, avec formation de particules solides.

Un tel procédé est connu du document SU1065341 qui décrit quant à lui la préparation de suspensions de chaux hydratée par hydratation d'une chaux vive avec de l'eau en présence d'eau usées déchlorurées et de Mg(OH)₂. Mg(OH)₂ sert à diminuer i) les pertes de CaO actif en limitant le dégagement de chaleur au début de la réaction d'hydratation et en favorisant l'hydratation complète des particules de CaO, même les moins réactives, ii) la viscosité de la suspension et iii) la concentration en impuretés dans la suspension obtenue. Le Mg(OH)₂ est ajouté dans l'eau d'hydratation avant l'hydratation de la chaux vive, à hauteur de 3 à 9 % de la masse de CaO disponible dans la chaux mère. Les chaux utilisées dans les exemples sont des chaux très impures ne contenant que 72 % de CaO disponible, le reste étant du CaO inactif, du CaCO₃ et des impuretés.

Un tel procédé est également connu par exemple du document WO98/51614 qui divulgue différentes voies de production d'un tel composé mixte avec pour but de fournir une solution permettant d'accélérer et donc d'améliorer la captation de grandes quantités d'acides, de métaux et d'anions dans les eaux usées, par rapport à la captation obtenue en utilisant une suspension d'hydroxyde de magnésium standard pour le traitement de ces eaux. La solution en question revient à utiliser une suspension d'un composé magnésien, tel que Mg(OH)₂, modifiée en ajoutant 5 à 30 % d'un composé calcique, à savoir entre autres, Ca(OH)₂ par rapport à la masse de Mg(OH)₂.

Cette suspension modifiée peut-être obtenue, comme mentionné précédemment de diverses façons. Tout d'abord, une des voies décrites revient à hydrater ensemble et sous pression, en présence d'additifs obligatoires, un mélange de sources calcique et magnésienne, à savoir de MgO et de CaO. Après stabilisation, tamisage et désagglomération, une suspension est obtenue qui contient 55-65 % de matière sèche, par rapport au poids total de la composition.

Ensuite, une autre voie décrite consiste à hydrater à pression atmosphérique, pendant des durées très longues et avec des additifs obligatoires, un mélange de sources calcique et magnésienne, telles que de MgO et de CaO.

Enfin, une dernière voie est décrite, dans laquelle un composé mixte est obtenu en mélangeant une source calcique de CaO avec une suspension magnésienne diluée de Mg(OH)₂ préparée au préalable par l'une quelconque des techniques connues pour la production de suspensions de Mg(OH)₂ et contenant 50-60 % en poids de fraction solide par rapport au poids total de la suspension. Après ajout de la source de CaO, l'agitation de la suspension permet l'hydratation de cette source de CaO et la formation de Ca(OH)₂.

Seul l'exemple 1 de ce document décrit la production d'une telle suspension de Mg(OH)₂ modifiée par la présence de Ca(OH)₂, les autres exemples décrivant l'utilisation de cette suspension pour le traitement de l'eau.

Toutefois, ce document ne divulgue pas l'obtention de composés mixtes secs à l'état pulvérulent, les composés obtenus étant toujours divulgués sous forme d'une suspension.

Il est pourtant avéré qu'il existe un besoin de produire de manière simple et peu coûteuse, des composés mixtes calciques et magnésiens essentiellement sous forme d'hydroxydes secs qui se présentent sous la forme de poudres ayant une humidité inférieure à 30 % en poids, comme par exemple des composés pouvant être utilisés comme retardateur de flamme et dont le rapport Ca/Mg est variable et contrôlé tout en pouvant présenter une surface spécifique et un volume poreux contrôlé, en fonction des applications envisagées.

L'invention a pour but de pallier les inconvénients de l'état de la technique en procurant un procédé permettant de produire des composés calciques et magnésiens mixtes à rapport Ca/Mg variable et contrôlé et à surface spécifique et volume poreux contrôlable, dont la consommation énergétique est réduite et ne nécessitant pas une infrastructure spécifique réduisant ainsi les coûts du composé pour en permettre une utilisation large, y compris dans des domaines à valeur ajoutée moins élevée.

Pour résoudre ce problème, il est prévu suivant l'invention, un procédé tel qu'indiqué au début caractérisé en ce que ledit milieu aqueux est une suspension d'hydroxyde de magnésium et en ce que lesdites particules solides sont des particules de composé mixte de formule xCa(OH)₂.yMg(OH)₂.zl comprenant une phase calcique et une phase magnésienne intimement liées et de répartition volumique homogène, et dans lequel x, y et z sont des fractions pondérales où x + y est compris entre 88 et 100 % en poids par rapport au poids total du composé mixte, et où I représente des impuretés.

La solution envisagée selon la présente invention consiste donc à éteindre une chaux vive dans un hydrateur classique par voie non-humide avec une suspension de Mg(OH)₂. Cette solution présente différents avantages en comparaison des procédés décrits précédemment, pour la production de composés mixtes à base de calcium et de magnésium totalement hydratés. Elle permet en effet de faire varier de façon contrôlée le rapport Ca/Mg dans la production d'hydrates Ce rapport Ca/Mg est en revanche subi dans les dolomies hydratées, puisque fixé par la composition de la dolomie originelle.

De plus, avec le procédé selon l'invention, le magnésium est déjà sous la forme d'hydroxyde. Par conséquent, l'extinction concerne exclusivement l'oxyde de calcium, beaucoup plus réactif en présence d'eau au contraire de MgO dont l'hydratation est difficile.

Lors de l'extinction de CaO pour former Ca(OH)₂, des particules de Mg(OH)₂ sont incorporées dans l'hydroxyde de calcium formé, sans qu'il n'y ait de substitution au niveau du réseau cristallin.

Le procédé selon l'invention permet aussi une flexibilité quant à la surface spécifique et au volume poreux de l'hydroxyde double, ceux de la dolomie totalement hydratée n'étant généralement que de l'ordre de 15-25 m²/g et de l'ordre de 0,05 - 0,15 cm³/g, respectivement.

Dans la suite, on entend d'une part par « surface spécifique » ou « surface spécifique BET », la surface spécifique mesurée par manométrie d'adsorption d'azote et calculée par la méthode BET et d'autre part par « volume poreux » ou « volume poreux BJH », le volume des pores d'une taille de 17 à 1000 Å, mesuré par manométrie d'adsorption d'azote et calculé par la méthode BJH. Les tailles de particules sont quant à elles déterminées par granulométrie laser.

Avantageusement, le procédé selon la présente invention comprend préalablement à ladite extinction de chaux vive, une préparation dudit lait d'hydroxyde de magnésium par mise en suspension dans l'eau d'une quantité prédéterminée d'hydroxyde de magnésium solide, comprise entre 1 et 55% en poids par rapport au poids de ladite suspension d'hydroxyde de magnésium.

Dans une variante, l'apport de lait d'hydroxyde de magnésium pour la réaction d'extinction de la chaux vive est réalisé à partir d'un lait d'hydroxyde de magnésium commercial dilué ou non.

Le lait ou la suspension de Mg(OH)₂ est une suspension aqueuse de particules solides de Mg(OH)₂. Sa teneur en matière sèche est très variable et est comprise entre 1 et 55 % en poids, de préférence entre 5 et 53 % en poids, de préférence entre 10 et 40 % en poids et de manière particulièrement avantageuse, entre 20 et 30 % en poids.

Le Mg(OH)₂ est un produit industriel courant, vendu sous la forme de lait ou sous la forme de poudre, qui provient d'une séparation et du séchage d'un tel lait.

La fraction solide du lait d'hydroxyde de magnésium utilisé dans le procédé selon l'invention contient au minimum 88 % en poids de Mg(OH)₂, en particulier au moins 90 %, de préférence au moins 92 % en poids et avantageusement au moins 95 % en poids de Mg(OH)₂, le reste se trouvant sous la forme d'impuretés (CaO, Al₂O₃, SiO₂, Fe₂O₃...) et de MgO dont la teneur est inférieure à 2 %, avantageusement inférieure à 1 % et de préférence inférieure à 0,5 % de MgO.

La surface spécifique de la fraction solide du lait d'hydroxyde de magnésium est comprise entre 5 et 15 m²/g, de préférence entre 5 et 10 m²/g, avantageusement entre 6 et 8 m²/g. Son volume poreux est compris entre 0,02 et 0,05 cm³/g, de préférence entre 0,02 et 0,04 cm³/g et avantageusement entre 0,02 et 0,03 cm³/g. Cette fraction solide présente un d₉₀ compris entre 5 et 20 µm, de préférence < à 15 µm, avantageusement < à 10 µm et un d₅₀ compris entre 2 et 10 µm, de préférence < à 8 µm, avantageusement < 5 µm.

La notation d_{X} représente un diamètre, exprimé en µm, par rapport auquel X % des particules mesurées sont plus petites.

Dans une forme de réalisation particulière, ladite extinction de chaux vive est réalisée par voie sèche.

Dans une autre forme de réalisation particulière de l'invention, ladite extinction de chaux vive est réalisée par voie quasi-sèche et est suivie dune étape de séchage et de désagglomération.

Le procédé selon la présente invention comprend avantageusement en outre, une étape de coupure granulométrique.

Dans une forme de réalisation particulièrement avantageuse du procédé selon l'invention, ladite quantité d'hydroxyde de magnésium est comprise entre 5 et 53 % en poids, de préférence entre 10 et 40 % en poids, en particulier entre 20 et 30 % en poids, par rapport au poids total du lait d'hydroxyde de magnésium.

De plus, dans un mode de réalisation particulièrement avantageux, ladite chaux vive est constituée de particules dont la taille est comprise entre 10 µm et 10 mm, de préférence passant intégralement au travers d'un tamis de 5 mm, et plus particulièrement un tamis de 2 mm.

Dans encore un autre mode de réalisation, ledit milieu aqueux comprend en outre un additif choisi dans le groupe des additifs augmentant la surface spécifique des particules de Ca(OH)₂ dudit composé mixte tel que des alcools, des amines, et analogues.

Ces additifs sont par exemple choisis parmi l'éthylène glycol, le diéthylène glycol, le triéthylène glycol, la monoéthanolamine, la diéthanolamine, la triéthanolamine et leurs mélanges.

Dans un mode de réalisation particulier, ledit milieu aqueux comprend un additif de type acide gras, en particulier un stéarate et de manière particulièrement avantageuse du stéarate de calcium. En effet, dans certaines applications envisageables pour le composé mixte selon la présente invention, notamment des applications en tant que charge dans des polymères et en particulier en tant que charge retardatrice de flamme dans des polymères, de tels additifs sont généralement utilisés comme agents de surface ou agents de couplage. Ils sont nécessaires pour traiter la charge en surface afin d'améliorer la compatibilité de la charge et de la matrice polymère.

Ces agents de couplage sont généralement ajoutés à la charge dans une étape indépendante du procédé de fabrication des pièces polymères, par un mélange intensif entre la charge et l'agent de couplage. Selon la présente invention, un tel agent de couplage peut être ajouté dans la suspension d'hydroxyde de magnésium, ce qui revient à réaliser un traitement de surface in situ pendant la synthèse du composé mixte selon l'invention dans le but de l'utiliser en tant que charge.

D'autres formes de réalisation du procédé suivant l'invention sont indiquées dans les revendications annexées.

L'invention a aussi pour objet un composé mixte pulvérulent comprenant une phase calcique et une phase magnésienne sous forme solide et pulvérulente, caractérisé en ce qu'il présente la formule générale xCa(OH)₂.yMg(OH)₂.zl, et dans lequel ladite phase calcique et ladite phase magnésienne sont intimement liées et de répartition volumique homogène, et dans lequel x, y et z sont des fractions pondérales où x + y est compris entre 88 et 100 % en poids par rapport au poids total du composé mixte, et où I représente des impuretés.

Dans le composé mixte selon l'invention, la taille des particules d₉₇ est inférieure à 250 µm, de préférence inférieure à 200 µm, avantageusement inférieure à 90 µm et plus particulièrement inférieure à 60 µm.

Avantageusement, le composé mixte selon l'invention est sous la forme d'un hydrate sec présentant une teneur en humidité relative inférieure à 4% en poids, de préférence inférieure à 2% en poids, plus préférentiellement inférieure à 1 % en poids, par rapport au poids total du composé mixte.

Dans le composé mixte selon l'invention sous forme dudit hydrate sec, la teneur en Mg(OH)₂ est comprise entre 0,4 et 48 % en poids, de préférence entre 0,5 et 43 % en poids, plus particulièrement entre 0,6 et 40 % en poids, par rapport au poids total du composé et la teneur en Ca(OH)₂ est comprise entre 40 et 99,6 % en poids, de préférence entre 45 et 99,5 % en poids, plus particulièrement entre 48 et 99,4 % en poids, par rapport au poids total du composé mixte.

De cette manière, la proportion de Mg(OH)₂ rapportée à la masse de Ca(OH)₂ dans le composé mixte selon l'invention est comprise entre 0,4 et 120 %. De préférence, cette proportion est comprise entre 5 et 80 %, en particulier entre 10 et 60 % et dans un cas particulier entre 30 et 50 %. A l'inverse, la proportion de Ca(OH)₂ rapportée à la masse de Mg(OH)₂ dans le composé mixte selon l'invention est alors comprise entre 80 et 25000 %. De préférence, elle est comprise entre 125 et 2000 %, en particulier entre 165 et 1000 % et dans un cas particulier entre 200 et 350 %.

Avantageusement, l'hydrate sec selon l'invention présente une surface spécifique BET comprise entre 5 et 20 m²/g, de préférence supérieure à 10 m²/g et en particulier entre 13 et 17 m²/g.

Particulièrement, l'hydrate sec selon l'invention présente un volume poreux BJH compris entre 0,02 et 0,1 cm³/g, de préférence supérieur à 0,03 cm³/g et avantageusement entre 0,04 et 0,07 cm³/g.

Dans une variante selon la présente invention, le composé mixte présente une teneur en humidité entre 15 et 30 % en poids, de préférence supérieure à 17%, ou avantageusement supérieure à19 % en poids par rapport au poids dudit composé mixte, sous la forme d'un hydrate humide et présente une humidité inférieure à 4%, de préférence inférieure à 2%, voire même inférieure à 1%, après séchage.

Avantageusement, le composé mixte obtenu par voie quasi sèche selon l'invention présente sur base sèche une teneur en Mg(OH)₂ comprise entre 0,8 et 58 % en poids, de préférence entre 0,9 et 53 % en poids, par rapport au poids total du composé et présentant une teneur en Ca(OH)₂ comprise entre 30 et 99,2 % en poids, de préférence entre 35 et 99,1 % en poids, par rapport au poids total du composé mixte.

De cette manière, la proportion de Mg(OH)₂ rapportée à la masse de Ca(OH)₂ dans le composé mixte selon l'invention est comprise entre 0,8 et 200 %. De préférence, cette proportion est comprise entre 5 et 80 %, en particulier entre 10 et 60 % et dans un cas particulier entre 30 et 50 %. A l'inverse, la proportion de Ca(OH)₂ rapportée à la masse de Mg(OH)₂ dans le composé mixte selon l'invention est alors comprise entre 50 et 12500 %. De préférence, elle est comprise entre 125 et 2000 %, en particulier entre 165 et 1000 % et dans un cas particulier entre 200 et 350 %.

Plus particulièrement, le composé selon l'invention obtenu en voie quasi sèche présente présentant une surface spécifique BET comprise entre 20 et 50 m²/g, de préférence supérieure ou égale à 25 m²/g et supérieure ou égale à 30 m²/g, en particulier supérieure ou égale à 35m²/g.

De préférence, dans un mode de réalisation particulièrement avantageux, le composé mixte de la voie quasi sèche selon l'invention présente un volume poreux BJH compris entre 0,10 et 0,25 cm³/g, de préférence supérieur ou égal à 0,11 cm³/g et avantageusement supérieur ou égal à 0,13 cm³/g, en particulier supérieur ou égal à 0,15 cm³/g.

D'autres formes de réalisation du composé mixte suivant l'invention sont indiquées dans les revendications annexées.

D'autres caractéristiques, détails et avantages de l'invention ressortiront de la description donnée ci-après, à titre non limitatif et en faisant référence aux dessins et aux exemples annexés.
La figure 1 est un graphique présentant les courbes de thermogravimétrie enregistrées pour les produits des exemples 1 puis 3 à 6 (température de 20 à 950 °C avec une rampe de 2°C/min, sous air)
La figure 2 est un graphique présentant les courbes de thermogravimétrie enregistrées pour les produits des exemples 7 à 9 (température de 20 à 950 °C avec une rampe de 5°C/rin, sous air.)

Sur les figures, les éléments identiques ou analogues portent les mêmes références.

Le procédé selon la présente invention peut être décrit en différentes étapes successives résumées comme suit:
i) préparation d'un lait de Mg(OH)₂, éventuellement effectuée de façon indépendante ;
ii) hydratation d'une chaux vive avec le lait de Mg(OH)₂ ainsi préparé
iii) séchage éventuel et désagglomération éventuelle du produit, en cas d'extinction avec excès d'eau
iv) contrôle granulométrique

L'étape ii) d'hydratation de la chaux vive est réalisée dans un hydrateur tout à fait standard pour l'extinction de chaux vive par voie sèche.

Dans le procédé selon l'invention, l'hydrateur peut-être soit un hydrateur mono-étage, c'est-à-dire constitué d'un unique réacteur cylindrique horizontal équipé d'un axe central et de pâles d'agitation, ce réacteur pouvant ou non être muni d'un autre cylindre horizontal servant de pré-mélangeur, soit un hydrateur multi-étages composés par exemple de 3 réacteurs horizontaux successifs de diamètre croissant, dans lesquels le produit tombe au fur et à mesure de la réaction d'hydratation.

L'hydrateur est alimenté en chaux vive pulvérulente, ayant une taille de particules comprise entre 20 µm et 10 mm, de préférence < à 5 mm, de préférence < à 2 mm. Les chaux vives sont habituellement caractérisées par leur pureté chimique et par leur réactivité.

Par pureté élevée, on entend un faible taux d'impuretés, c'est-à-dire en général moins de 5%, avantageusement moins de 4 % en poids et de préférence moins de 3 %, voire moins de 2 % en poids des impuretés classiques qui se trouvaient au départ dans le calcaire (MgO, SiO₂, Al₂O₃,...), mais aussi une teneur en chaux disponible élevée. Le terme 'chaux disponible' représente communément la fraction de la chaux vive qui se trouve effectivement sous la forme CaO et/ou Ca(OH)₂ selon la norme EN 459-2 : 2010 §5.8 ou ASTM C25 of 1994. Cela exclut toutes les autres formes possibles du calcium comme les incuits (CaCO₃) ou les composés de types silicates ou aluminates de calcium. Les chaux vives utilisées dans le procédé selon l'invention contiennent plus de 90 % en poids, avantageusement plus de 93%, , de préférence plus de 96 % en poids et de manière particulièrement avantageuse plus de 97 % en poids de chaux disponible. La proportion d'incuits dans les chaux vives utilisées dans le procédé selon l'invention est normalement inférieure à 3 %, avantageusement inférieure à 2 %, de préférence inférieure à 1 % en poids.

La réactivité de la chaux vive est caractérisée par le test de réactivité décrit dans la norme EN 459-2 : 2010 §6.6 et en particulier par la valeur du t₆₀. Les chaux utilisées dans le procédé selon l'invention ont un t₆₀ dans la gamme 0,3 à 8 minutes, de préférence compris entre 0,5 et 5 minutes.

Le débit de chaux vive utilisé dans le procédé selon l'invention est similaire au débit de chaux vive habituellement utilisé pour une extinction en voie sèche classique lors de laquelle la chaux est éteinte uniquement avec de l'eau dans le but de produire une chaux hydratée et pulvérulente.

Le débit de lait de Mg(OH)₂ utilisé dans le procédé selon l'invention varie en fonction de la teneur en humidité et en Mg(OH)₂ souhaitée pour le produit final. A la sortie de l'hydrateur, l'humidité du produit est comprise entre 1 et 30 % en poids. Plus le produit qui sort de l'hydrateur est humide, plus sa surface spécifique et son volume poreux seront élevés.

L'humidité finale du produit en sortie de l'hydrateur est fixée en fonction de la surface spécifique et du volume poreux souhaité. La quantité d'eau à ajouter à la chaux vive pour l'obtention de cette humidité est alors déterminée en tenant compte de l'évaporation liée au caractère exothermique de la réaction d'hydratation de la chaux vive. Toute l'eau nécessaire à l'hydratation de la chaux vive est apportée par le lait de Mg(OH)₂. Ensuite, en fonction des proportions de Ca(OH)₂ et de Mg(OH)₂ respectives souhaitées dans le produit final, la quantité de Mg(OH)₂ à ajouter à la chaux vive est calculée.

Pour une durée d'hydratation donnée, on peut alors calculer la quantité d'eau et la quantité de Mg(OH)₂ à ajouter à la quantité de chaux vive qui sera introduite dans l'hydrateur. Ces quantités d'eau et de Mg(OH)₂ sont mises en contact avant l'hydratation, soit en utilisant un lait de Mg(OH)₂ pré-éxistant (dilué ou non) pour avoir les masses souhaitées d'eau et de Mg(OH)₂, soit en dispersant la quantité souhaitée de Mg(OH)₂ en poudre dans la quantité souhaitée d'eau. Le lait ainsi préparé est bien homogénéisé lors de sa préparation puis il est pompé afin d'être injecté dans l'hydrateur, sur la chaux vive, soit par des simples orifices, soit par des buses de pulvérisation adaptées au diamètre des particules de Mg(OH)₂ afin d'en éviter le bouchage. Pendant toute la durée de l'hydratation, le lait de Mg(OH)₂ est maintenu sous agitation afin d'éviter toute sédimentation des particules de Mg(OH)₂. Des prélèvements réguliers sont effectués en sortie de l'hydrateur et l'humidité de ces prélèvements est mesurée. Si cette humidité correspond à l'humidité souhaitée, aucun réglage supplémentaire n'est nécessaire. Si cette humidité est trop basse, le débit de lait de Mg(OH)₂ peut être augmenté ou le débit de chaux vive diminué. Si l'humidité est trop élevée, le débit de lait de Mg(OH)₂ peut être diminué ou celui de chaux vive augmenté.

Si le produit qui sort de l'hydrateur a une humidité inférieure à 2 % voire inférieure à 4%, il peut directement passer à l'étape iv) de contrôle granulométrique.

En revanche si son humidité est comprise entre 4 et 30 %, le produit doit être séché. Il doit en même temps être désaggloméré car un tel excès d'humidité conduit à une agglomération plus ou moins marquée des particules d'hydroxydes de calcium (Ca(OH)₂) Cette étape de séchage et de désagglomération se fait industriellement, de préférence dans un broyeur de type « cage mill ». D'autres équipements, notamment de type « flash dryer », peuvent être utilisés. Après cette étape, le produit doit contenir moins de 2 % d'humidité, de préférence moins de 1 % d'humidité et ses particules doivent être de taille inférieure à 1 mm, de préférence à 500 µm et de manière avantageuse inférieure à 200 µm, ce qui signifie que le d₉₇ doit être inférieur aux tailles précitées.

Dans la plupart des cas, les chaux hydratées ou les dolomies semi ou totalement hydratées standards passent par un contrôle granulométrique avant d'être utilisées dans les diverses applications. Ce contrôle granulométrique permet d'éliminer les particules les plus grossières (les incuits notamment) afin d'obtenir un hydrate réactif en vue de l'application envisagée. Dans le cas du procédé selon l'invention, une étape de contrôle granulométrique similaire est souhaitable. Cette étape est réalisée industriellement dans des séparateurs à air ; elle peut être opérée par tamisage. La coupure se fait généralement dans l'objectif d'avoir un produit < 250 µm, de préférence < 200 µm, de préférence < 90 µm, voire parfois < 60 µm.

Le produit obtenu avec le procédé selon l'invention est un produit mixte à base de calcium et de magnésium, ces deux éléments se trouvant très majoritairement sous leur forme d'hydroxyde (Ca(OH)₂ et Mg(OH)₂). Le Mg(OH)₂ qui se trouve dans le produit final issu du procédé selon l'invention a les mêmes caractéristiques qu'avant l'hydratation lorsqu'il est mis sous la forme de lait. En effet, le Mg(OH)₂ n'est pas altéré durant la réaction d'hydratation et conserve par conséquent les mêmes critères de pureté chimique et de porosité que ceux décrits ci-dessus. Le Ca(OH)₂ qui se trouve dans le produit final est quant à lui le produit de la réaction d'hydratation qui a eu lieu entre la chaux vive et l'eau apportée dans l'hydrateur par le lait de Mg(OH)₂.

Le produit final peut être décrit par une formule générale du type xCa(OH)₂.*y*Mg(OH)₂.zl, Ca(OH)₂ représentant majoritairement ladite phase calcique et Mg(OH)₂, ladite phase magnésienne. Ces deux phases sont intimement liées et de répartition volumique homogène. x, y et z sont des fractions pondérales. y est plus particulièrement compris entre 0,4 et 58 %, de préférence entre 3 et 53 %, avantageusement entre 5 et 44 % et de manière particulièrement avantageuse entre 10 et 30 %. Toutefois, il est important de noter que la somme de *x* et de y est comprise entre 88 et 100 % en poids par rapport au poids total du composé mixte et n'est typiquement pas égale à 100 %. En effet, en plus des fractions Ca(OH)₂ et Mg(OH)₂ ultra majoritaires, le produit final contient des impuretés apportées par le lait de Mg(OH)₂ ainsi que des impuretés et des incuits (CaCO₃) apportés par la chaux vive représentées par I. Par ailleurs, il est possible que l'hydratation de la chaux vive ne soit pas complète dans le procédé selon l'invention, conduisant ainsi à la présence de chaux vive résiduelle CaO dans le produit final. La teneur en CaO résiduel dans le produit final est toutefois la plus basse possible et est aussi comprise dans I, laquelle est comprise entre 0,1 et 3 %, de préférence inférieure à 2 % et avantageusement inférieure à 1 % en poids. La teneur en MgO, également comprise dans I, dans le produit final est quant à elle inférieure à 2 %, de préférence inférieure à 1 % et en particulier inférieure à 0,5 % en poids. De manière préférentielle, les teneurs en impuretés et en incuits sont les plus faibles possibles et la somme de x et de y est supérieure à 90 %, de préférence à 92 %, avantageusement à 95 %, en particulier à 97 % et de manière extrêmement préférentielle supérieure à 98 %. Il est à noter que lorsque le produit est obtenu par voie quasi-sèche, il y a carbonatation partielle de la phase calcique lors du séchage du composé mixte selon la présente invention, ce qui augmente la valeur de la fraction pondérale z par rapport à un composé mixte obtenu par voie sèche.

En pratique, la proportion y de Mg(OH)₂ dans le produit final est dépendante de l'humidité du produit à la sortie de l'hydrateur. En effet, il a été dit plus haut que toute l'eau nécessaire à la réaction d'hydratation est apportée par le lait de Mg(OH)₂ qui a une concentration maximale de l'ordre de 55 % en poids. Par conséquent, pour atteindre une humidité donnée en sortie de l'hydrateur, il faut ajouter à la chaux vive une quantité donnée d'eau pour la réaction d'hydratation et la quantité de Mg(OH)₂ ajoutée est alors au maximum égale à 122 % de cette quantité d'eau (car le lait contient au maximum 55 % de Mg(OH)₂ et 45 % d'eau). Les proportions de y exprimées dans le paragraphe ci-dessus correspondent à un produit qui a en sortie de l'hydrateur une humidité comprise entre 1 et 30 % en poids.

Concernant cette humidité, elle est comprise entre 1 et 30 % en poids en sortie de l'hydrateur, avec toutefois deux familles de produits préférées.

La première famille de produits selon l'invention a une humidité en sortie de l'hydrateur qui est inférieure à 4 % en poids, de préférence inférieure à 2 % en poids et de préférence inférieure à 1 % en poids. Cette famille correspond à la famille des hydrates secs qui ne nécessitent pas de séchage avant les étapes de contrôles granulométriques et de conditionnement. Compte tenu de la remarque ci-dessus pointant la dépendance de la proportion de Mg(OH)₂ vis-à-vis de l'humidité du produit à la sortie de l'hydrateur, les produits de cette famille contiennent entre 0,4 et 48 % de Mg(OH)₂ et par conséquent entre 40 et 99,6 % de Ca(OH)₂. De préférence, la proportion de Mg(OH)₂ dans le produit final est comprise entre 0,5 et 43 % en poids, en particulier entre 0,6 et 40 % en poids. Celle de Ca(OH)₂ est par conséquent de préférence comprise entre 45 et 99,5 % en poids, de préférence entre 48 et 99,4 % en poids (pour une somme de x et y allant de 88 à 100 %). Les produits de cette famille ont une surface spécifique et un volume poreux qui sont du même ordre de grandeur que ceux des chaux hydratées habituelles obtenues par voie sèche classique. Après l'étape de contrôle granulométrique, l'ensemble des particules des produits de cette famille présente une taille inférieure à 250 µm, de préférence < 200 µm, avantageusement < 90 µm, voire parfois < 60 µm. Cela signifie que le d₉₇ est inférieur aux tailles précitées.

La seconde famille de produits préférés selon l'invention a une humidité en sortie de l'hydrateur comprise entre 15 et 30 % en poids, de préférence supérieure à 17 %, en particulier supérieure à 19%, de préférence inférieure à 25%, en particulier inférieure à 22%. Cette famille correspond à la famille des produits qui nécessitent une étape de séchage préalable aux étapes de contrôles granulométriques et de conditionnement. A l'issue de l'étape de séchage, les produits de cette famille ont idéalement une humidité inférieure à 2 % en poids, de préférence inférieure à 1 % en poids. Le séchage peut être réalisé simultanément ou préalablement à une étape de désagglomération généralement suivie d'une étape de contrôle granulométrique tel que cela a été décrit dans la partie concernant le procédé ci-dessus, l'ensemble des particules des produits de cette famille présente alors, à la fin du procédé selon l'invention, une taille inférieure à 250 µm, de préférence < 200 µm, avantageusement < 90 µm, voire parfois < 60 µm. Cela signifie que le d₉₇ est inférieure aux tailles précitées.

Compte tenu de la remarque ci-dessus pointant la dépendance de la proportion de Mg(OH)₂ vis-à-vis de l'humidité du produit à la sortie de l'hydrateur, les produits de cette famille contiennent, une fois séchés, entre 0,8 et 58 % de Mg(OH)₂ et par conséquent entre 30 et 99,2 % de Ca(OH)₂. De préférence, la proportion de Mg(OH)₂ dans le produit final est comprise entre 0,9 et 53 % en poids, de préférence entre 1.0 et 51 % en poids. Celle de Ca(OH)₂ est par conséquent de préférence comprise entre 35 et 99,1 % en poids, de préférence entre 37 et 99,0 % en poids (pour une somme de x et y allant de 88 à 100 %). Les produits de cette famille ont une surface spécifique et un volume poreux élevés. Leur surface spécifique est supérieure à 20 m²/g, de préférence supérieure à 25 m²/g, en particulier supérieure à 30 m²/g et inférieure à 50 m²/g, en particulier inférieure à 45 m²/g, notamment inférieure à 40m²/g, voire inférieure à 35 m²/g. Leur volume poreux est supérieur à 0,10 cm³/g, de préférence supérieure à 0,11 cm³/g, avantageusement supérieure à 0,13 cm³/g et inférieur à 0,25 cm³/g, en particulier inférieur à 0,20 cm³/g, notamment inférieur à 0,18 cm³/g, voire inférieur à 0,16 cm³/g.

Pour ces deux familles de produits, la surface spécifique et le volume poreux dépendent des proportions x et y de Ca(OH)₂ et de Mg(OH)₂. En effet, la surface spécifique et le volume poreux du Mg(OH)₂ ne sont pas modifiées au cours de la réaction décrite dans le procédé selon l'invention et restent par conséquent faibles. Quelque soit l'humidité du produit à la sortie de l'hydrateur, la surface spécifique et le volume poreux du Ca(OH)₂ formé au cours de la réaction décrite par le procédé selon l'invention sont plus élevés que ceux du Mg(OH)₂ impliqué dans le procédé. Par conséquent, plus la proportion de Mg(OH)₂ dans le produit est importante, plus la surface spécifique et le volume poreux du produit final à base de Ca(OH)₂ et de Mg(OH)₂ seront faibles. Cet effet de diminution de la surface spécifique et du volume poreux du produit avec l'augmentation de la proportion de Mg(OH)₂ est d'autant plus marqué dans le cas de la deuxième famille de produits. En effet, lorsque l'humidité en sortie de l'hydrateur est élevée, la surface spécifique et le volume poreux du Ca(OH)₂ formé au cours de l'hydratation de la chaux vive sont élevés et chaque pour-cent de Mg(OH)₂ de faibles surface spécifique et volume poreux ajouté à un Ca(OH)₂ de ce type conduit pour le mélange à une diminution proportionnelle de la surface spécifique et du volume poreux.

Dans tous les cas, ajouter Mg(OH)₂ sous la forme d'une suspension homogène dans l'hydrateur au cours de la réaction d'hydratation de CaO en Ca(OH)₂ permet l'obtention d'un mélange intime entre les composés Ca(OH)₂ et Mg(OH)₂, mélange nettement plus intime que dans le cas de simples mélanges physiques de Ca(OH)₂ et de Mg(OH)₂.

### Exemples

L'hydrateur de laboratoire utilisé pour la réalisation de tous les exemples présentés dans la suite est un hydrateur mono-étage. Il se présente sous la forme d'un cylindre horizontal mesurant environ 80 cm de longueur sur 25 cm de diamètre. Ces proportions correspondent aux proportions des hydrateurs mono-étages industriels et ces dimensions sont 6 à 7 fois plus petites que les dimensions des hydrateurs industriels. Ce cylindre est muni d'une double enveloppe permettant de contrôler la température par circulation d'un fluide chaud ou froid. A l'intérieur de l'hydrateur, un axe muni de pâles sert à homogénéiser le produit pendant l'hydratation mais aussi à le pousser de l'entrée (à une extrémité) vers la sortie (à l'autre extrémité du cylindre). La chaux est introduite dans l'hydrateur par une vis sans fin, préalablement calibrée afin de régler le débit de chaux vive. Le lait de Mg(OH)₂ est quant à lui introduit dans l'hydrateur au niveau de deux orifices mesurant chacun environ 5 mm de diamètre, situés sur le couvercle de l'hydrateur, proches de l'arrivée de chaux vive. Lorsque le produit a parcouru toute la longueur de l'hydrateur, il en sort par simple débordement. En général, le niveau de remplissage de l'hydrateur est de l'ordre de 50 % en volume, c'est-à-dire que le lit de produit atteint environ la hauteur de l'axe. Pour tous les exemples ci-dessous, l'hydrateur est préchauffé à 70-80 °C parcirculation d'eau à 90 °C dans la double enveloppe. Ce préchauffage permet de simuler une mise en régime, acquise industriellement par le fonctionnement continu, et évite la condensation de la vapeur d'eau produite par la réaction d'hydratation de la chaux vive sur les parois de l'hydrateur lorsque celles-ci sont froides. La double enveloppe est ensuite vidangée lorsque la réaction d'hydratation commence dans l'hydrateur.

Dans le cas des hydratations avec excès d'eau (voie quasi-sèche exemples 1 à 6), le temps de séjour du produit dans l'hydrateur est de l'ordre de 15 minutes. Dans le cas des hydratations en voie sèche (exemples 7 à 9), le temps de séjour est plus long, de l'ordre de 25 minutes environ.

**Exemple 1.-** Production d'un composé mixte totalement hydraté de surface spécifique et volume poreux élevés, ayant un rapport molaire Ca/Mg proche de 1.

Une chaux vive n°1 (dont les propriétés sont reprises dans le Tableau 1) est hydratée dans l'hydrateur de laboratoire décrit ci-dessus avec un lait de Mg(OH)₂ dans des conditions particulières détaillées ci-dessous.

Le débit de chaux vive est de 300 g/min., ce qui correspond de manière théorique à 396 g de Ca(OH)₂/min., soit 5,34 mol de Ca(OH)₂/min. Il faut alors ajouter 5,34 mol de Mg(OH)₂/min., soit 312 g de Mg(OH)₂/min afin d'obtenir un composé mixte equimolaire.

Le Mg(OH)₂ utilisé dans cet exemple est noté source de Mg(OH)₂ n° 1 (ses principales propriétés sont décrites dans le Tableau 2) et se présente au départ sous la forme d'un lait contenant 53 % de matière solide. Il faut donc ajouter 589 g/min. de ce lait dans l'hydrateur afin d'obtenir un rapport Ca(OH)₂/Mg(OH)₂ d'environ 1. Toutefois, dans le but de développer la porosité de l'hydrate, un excès d'eau est nécessaire pendant la réaction d'hydratation. Dans ce cas particulier, l'excès d'eau doit permettre d'obtenir à la sortie de l'hydrateur un produit ayant une humidité comprise entre 16 et 22 %. L'eau introduite dans la réaction par les 589 g/min. de lait de Mg(OH)₂ n'étant pas suffisante pour atteindre ce niveau d'humidité, de l'eau supplémentaire doit être ajoutée. En pratique, cette eau est ajoutée au lait de Mg(OH)₂ avant son introduction dans l'hydrateur.

L'hydrateur reste en fonctionnement dans ces conditions opératoires pendant 30 minutes, produisant ainsi plus de 25 kg de produit humide pulvérulent. Pendant cette production, plusieurs prélèvements sont effectués afin de contrôler l'humidité du produit qui est mesurée par la perte de masse lors d'un séchage rapide à 150 °C.

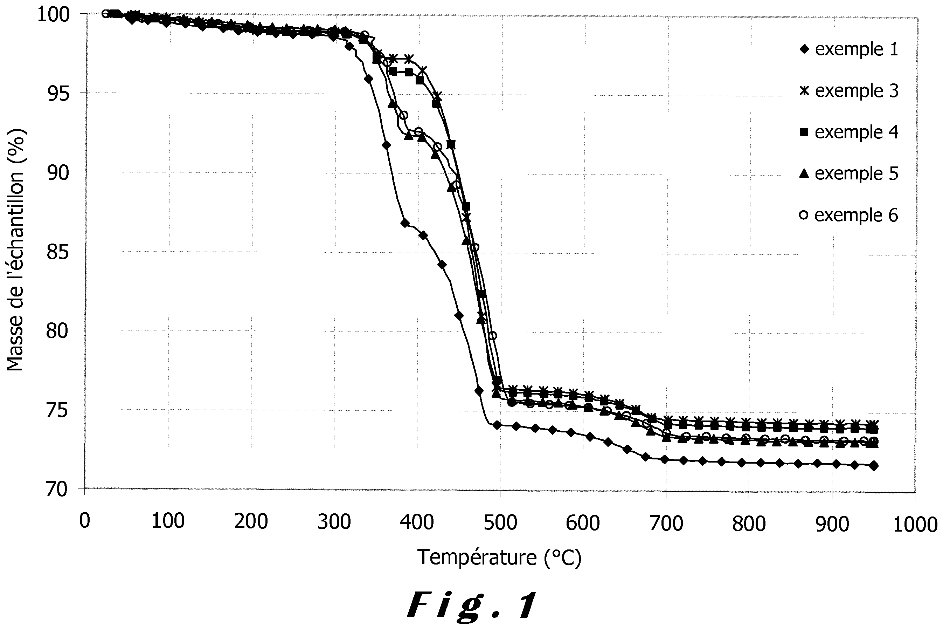

A la fin de la production, le produit est séché et désaggloméré par un passage éclair dans un courant d'air chaud à l'aide d'un 'spin flash dryer'. La température ressentie par le produit est de l'ordre de 130 °C. Il n'y a ici aucune étape de contrôle granulométrique. Une fois séché, le produit est caractérisé par une analyse thermogravimétrique (depuis la température ambiante jusqu'à 950 °C avec une montéeen température à 2 °C/min.) qui permet de déterminer les proportions réelles de Mg(OH)₂ et de Ca(OH)₂ dans le produit d'après les pertes de masses observées entre 300 et 400 °C puis entre 400 et 600 °C et qui correspondent respectivement aux déshydroxylations de Mg(OH)₂ et de Ca(OH)₂. La courbe de thermogravimétrie enregistrée pour ce produit est présentée sur la Figure 1. Une mesure de manométrie d'adsorption d'azote est également réalisée après avoir effectué un dégazage des produits à 190 °C pendant plusieurs heures. Cette mesure permet la détermination de la surface spécifique du produit par la méthode BET, la méthode BJH permettant, quant à elle, l'évaluation du volume des pores dont la taille est comprise entre 17 et 1000 Å.

Tous les résultats relatifs à ce produit sont regroupés dans la première colonne du Tableau 3.

**Exemple 2.-** Production d'un composé mixte totalement hydraté de surface spécifique et volume poreux élevés, ayant un rapport molaire Ca/Mg proche de 1.

Cet exemple est tout à fait comparable à l'exemple 1. La seule différence est que cette fois, le lait de Mg(OH)₂ est préalablement dilué avec une quantité d'eau plus importante que celle ajoutée au lait de Mg(OH)₂ dans l'exemple 1, l'objectif étant ici d'obtenir à la sortie de l'hydrateur un produit humide contenant 26 à 28 % d'humidité et non plus seulement 16 à 22 % comme cela était le cas dans l'exemple 1.

Le produit ainsi obtenu est séché et caractérisé de manière similaire au produit de l'exemple 1 et les résultats des mesures figurent à la deuxième colonne du Tableau 3.

L'excès d'eau utilisé pendant la réaction d'hydratation permet comme prévu le développement d'une surface spécifique et d'un volume poreux élevés. Le produit ayant une humidité de 26 à 28 % (exemple 2) a une surface spécifique équivalente à celle du produit dont l'humidité à la sortie de l'hydrateur était de 16-22 % (exemple 1) ; mais, le volume poreux est plus développé dans l'exemple 2. Une quantité minimale d'eau excédentaire est donc nécessaire au développement de la porosité (humidité ≥ 15 % en sortie de l'hydrateur), mais la quantité d'eau ne nécessite pas de contrôle précis, si seulement une surface spécifique élevée est recherchée. Elle doit toutefois rester inférieure à une limite (humidité ≤ 30 %) afin d'éviter la production d'un produit pâteux et non plus pulvérulent qui collerait, notamment dans l'hydrateur.

**Exemple 3.-** Production d'un composé mixte totalement hydraté de surface spécifique et volume poreux élevés, contenant environ 5 % de Mg(OH)₂ par rapport à la masse de Ca(OH)₂.

Cet exemple est fortement inspiré de l'exemple 1.

Le débit de chaux vive reste de 300 g/min. comme dans les exemples précédents, ce qui correspond toujours de manière théorique à 396 g de Ca(OH)₂/min. Il faut alors ajouter environ 20 g/min. de Mg(OH)₂, soit environ 38 g/min. de lait de Mg(OH)₂ à 53 % de matière solide initial. L'eau apportée par cette faible quantité de lait est très nettement insuffisante pour garantir l'hydratation complète de la chaux et de surcroit le développement de la porosité de l'hydrate. De l'eau est alors ajoutée afin d'obtenir à la sortie de l'hydrateur un produit ayant une humidité de l'ordre de 16 à 22 %. En pratique, cette eau est ajoutée à la suspension de Mg(OH)₂ avant son introduction dans l'hydrateur.

Le produit ainsi obtenu est séché et caractérisé de manière similaire au produit de l'exemple 1. La courbe de l'analyse thermogravimétrique est tracée sur la Figure 1. La première perte de masse (300-400 °C) est nettement plus faible que celle observée pour l'échantillon de l'exemple 1, ce qui traduit, une plus faible proportion de Mg(OH)₂. La seconde perte de masse (400-600 °C) est en revanche plus marquée et indique une proportion supérieure de Ca(OH)₂ par rapport au produit de l'exemple 1. Les résultats des différentes mesures se trouvent dans la troisième colonne du Tableau 3.

**Exemple 4.-** Production d'un composé mixte totalement hydraté de surface spécifique et volume poreux élevés, contenant environ 10 % de Mg(OH)₂ par rapport à la masse de Ca(OH)₂.

Cet exemple est comparable à l'exemple 3, à l'exception du pourcentage en Mg(OH)₂. Le débit de chaux vive reste de 300 g/min. comme dans les exemples précédents, ce qui correspond toujours de manière théorique à 396 g de Ca(OH)₂/min. Il faut alors ajouter environ 40 g/min. de Mg(OH)₂, soit environ 75 g/min. de lait de Mg(OH)₂ initial à 53 % de matière solide. De l'eau est alors ajoutée afin d'obtenir à la sortie de l'hydrateur une fois de plus un produit ayant une humidité de l'ordre de 16 à 22 %. En pratique, cette eau est ajoutée au lait de Mg(OH)₂ avant son introduction dans l'hydrateur.

Le produit ainsi obtenu est séché et caractérisé de manière similaire au produit de l'exemple 1. La courbe de l'analyse thermogravimétrique est tracée sur la Figure 1. Cette courbe est très proche de la courbe correspondant au produit de l'exemple 3. La perte de masse légèrement plus importante entre 300 et 400 °C pour le produit de cet exemple 4 traduit toutefois une proportion de Mg(OH)₂ plus élevée que pour le cas de l'exemple 3. Les résultats des différentes mesures se trouvent dans la quatrième colonne du Tableau 3.

**Exemple 5.-** Production d'un composé mixte totalement hydraté de surface spécifique et volume poreux élevés, contenant environ 30 % de Mg(OH)₂ par rapport à la masse de Ca(OH)₂.

Cet exemple est comparable aux exemples 3 et 4, à l'exception du pourcentage en Mg(OH)₂.

Le débit de chaux vive reste de 300 g/min. comme dans les exemples précédents, ce qui correspond toujours de manière théorique à 396 g de Ca(OH)₂/min. Il faut alors ajouter environ 119 g/min. de Mg(OH)₂, soit environ 225 g/min. de lait de Mg(OH)₂ initial à 53 % de matière solide. De l'eau est alors ajoutée afin d'obtenir à la sortie de l'hydrateur une fois de plus un produit ayant une humidité de l'ordre de 16 à 22 %. En pratique, cette eau est ajoutée au lait de Mg(OH)₂ avant son introduction dans l'hydrateur.

Le produit ainsi obtenu est séché et caractérisé de manière similaire au produit de l'exemple 1. La courbe de l'analyse thermogravimétrique est tracée sur la Figure 1. La perte de masse entre 300 et 400 °C est encore plus importante que dans les exemples 3 et 4, celle entre 400 et 600 °C étant en revanche plus fable, ce qui traduit à la fois une proportion plus élevée de Mg(OH)₂ et une proportion plus faible de Ca(OH)₂. Les résultats des différentes mesures se trouvent dans la cinquième colonne du Tableau 3.

**Exemple 6.-** Production d'un composé mixte totalement hydraté de surface spécifique et volume poreux élevés, contenant environ 30 % de Mg(OH)₂ par rapport à la masse de Ca(OH)₂.

Cet exemple est comparable à l'exemple 5. Néanmoins, la source de Mg(OH)₂ notée source n° 1 et utilisée pour les exemples 1 à 5 est ici remplacée par une source de Mg(OH)₂ n°2 dont les principales propriétés sont indiquées dans le Tableau 2. Cette fois, le Mg(OH)₂ ne se présente plus sous la forme d'un lait mais sous la forme d'une poudre sèche.

Comme dans l'exemple 5 ci-dessus, pour obtenir les proportions de Ca(OH)₂ et de Mg(OH)₂ souhaitées, il faut ajouter environ 119 g/min. de Mg(OH)₂ pour un débit de chaux vive de 300 g/min. Une production de 30 minutes correspond alors à 3570 g de Mg(OH)₂. Cette quantité de Mg(OH)₂ est mélangée avec une quantité d'eau bien déterminée et cette suspension est pompée puis introduite dans l'hydrateur. La quantité d'eau utilisée pour la préparation de ce lait est telle que l'humidité du produit à la sortie de l'hydrateur doit être comme précédemment comprise entre 16 et 22 %.

Le produit ainsi obtenu est séché et caractérisé de manière similaire au produit de l'exemple 1. La courbe de l'analyse thermogravimétrique est tracée sur la Figure 1. La courbe est tout à fait comparable à la courbe correspondant au produit de l'exemple 5, traduisant des compositions proches pour ces deux produits en termes de proportions de Mg(OH)₂ et de Ca(OH)₂. Les résultats des différentes mesures se trouvent dans la sixième colonne du Tableau 3.

**Exemple 7.-** Production d'un composé mixte totalement hydraté, contenant environ 5 % de Mg(OH)₂ par rapport à la masse de Ca(OH)₂.

Cette fois, le produit n'a aucune spécificité en termes de surface spécifique et de volume poreux par rapport à des hydrates secs standards, qu'ils soient purement calciques (chaux éteinte) ou dolomitiques.

Pour atteindre cet objectif, la chaux vive n°2 (décrite dans le Tableau 1) est utilisée à la place de la chaux vive n°1 utilisée dans les exemples précédents. Son débit est cette fois réglé à 200 g/min. seulement, ce qui correspond de manière théorique à 264 g de Ca(OH)₂/min. Il faut alors ajouter environ 13 g/min. de Mg(OH)₂. La source de Mg(OH)₂ est ici à nouveau la source n°1, c'est-à-dire le ait contenant 53 % en masse de Mg(OH)₂. Introduire dans l'hydrateur 13 g/min. de Mg(OH)₂ revient à y introduire 24,5 g de lait de Mg(OH)₂ à 53 % de matière solide initial. L'eau apportée par cette faible quantité de lait est très nettement insuffisante pour garantir l'hydratation complète de la chaux même si il n'y a pas de volonté dans cet exemple de développer la porosité de l'hydrate. De l'eau est alors ajoutée afin d'obtenir à la sortie de l'hydrateur un produit ayant une humidité de l'ordre de 1 à 4 %. En pratique, cette eau est ajoutée à la suspension de Mg(OH)₂ avant son introduction dans l'hydrateur.

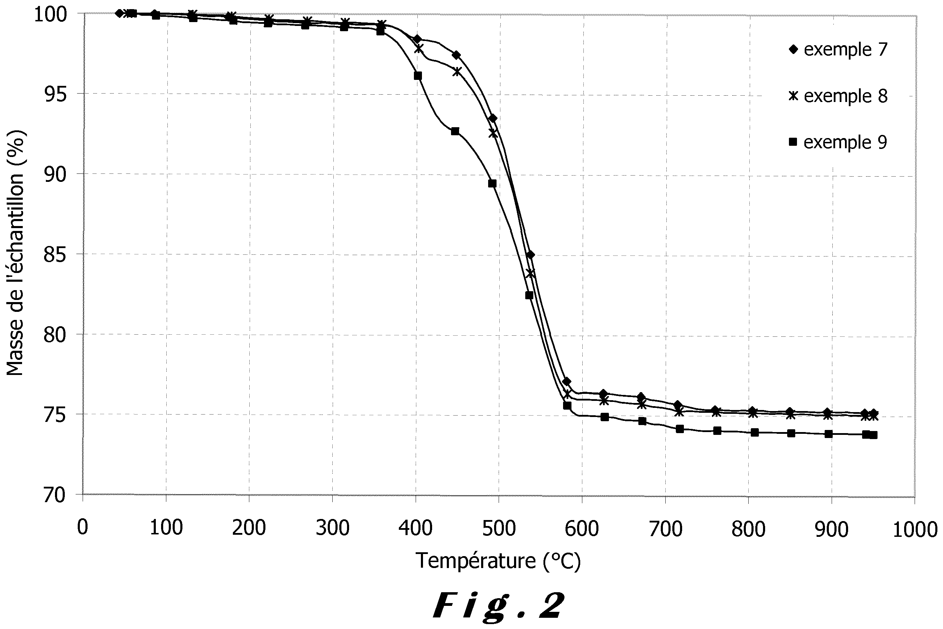

Contrairement aux exemples précédents, le produit n'est ni séché ni désaggloméré ; il est caractérisé de manière similaire au produit de l'exemple 1. La courbe de l'analyse thermogravimétrique est tracée sur la Figure 2. La mesure à cette fois été réalisée avec une vitesse de chauffe de 5 °C/min au lieu des 2 °C/min utilisés pour caractériser les produits des exemples ci-dessus. En conséquence, la décomposition de Mg(OH)₂ intervient cette fois entre 350 et 450 °C, celle de Ca(OH)₂ entre 450 et 650 °C. Les résultats des différentes mesures se trouvent dans la septième colonne du Tableau 3.

**Exemple 8.-** Production d'un composé mixte totalement hydraté contenant environ 10 % de Mg(OH)₂ par rapport à la masse de Ca(OH)₂.

Cet exemple est comparable à l'exemple 7, à l'exception du pourcentage en Mg(OH)₂..

Le débit de chaux vive est maintenu à 200 g/min., ce qui correspond toujours de manière théorique à 264 g de Ca(OH)₂/min. Il faut alors ajouter environ 26 g/min. de Mg(OH)₂, soit 49 g de lait de Mg(OH)₂ à 53 % de matière solide initial. L'eau apportée par cette faible quantité de lait est très nettement insuffisante pour garantir l'hydratation complète de la chaux même si il n'y a pas de volonté dans cet exemple de développer la porosité de l'hydrate. De l'eau est alors ajoutée afin d'obtenir à la sortie de l'hydrateur un produit ayant une humidité de l'ordre de 1 à 4 %. En pratique, cette eau est ajoutée au lait de Mg(OH)₂ avant son introduction dans l'hydrateur.

Le produit ainsi obtenu est caractérisé de manière similaire au produit de l'exemple 1. La courbe de l'analyse thermogravimétrique est tracée sur la Figure 2. Comme précédemment pour les produits de la Figure 1, l'augmentation de la première perte de masse (350-450 °C) et la diminution de la seconde perte de masse (450-650 °C) en comparaison de la courbe de l'exemple 7, indiquent une augmentation de la proportion de Mg(OH)₂ parallèlement à une diminution de celle de Ca(OH)₂. Les résultats des différentes mesures se trouvent dans la huitième colonne du Tableau 3.

**Exemple 9.-** Production d'un composé mixte totalement hydraté, contenant environ 30 % de Mg(OH)₂ par rapport à la masse de Ca(OH)₂.

Cet exemple est comparable aux exemples 7 et 8, à l'exception du pourcentage en Mg(OH)₂.

Le débit de chaux vive est maintenu à 200 g/min., ce qui correspond toujours de manière théorique à 264 g de Ca(OH)₂/min. Il faut alors ajouter environ 79 g/min. de Mg(OH)₂, soit 149 g de lait de Mg(OH)₂ à 53 % de matière solide initial. De l'eau est alors ajoutée afin d'obtenir à la sortie de l'hydrateur un produit ayant une humidité de l'ordre de 1 à 4 %. En pratique, cette eau est ajoutée au lait de Mg(OH)₂ avant son introduction dans l'hydrateur.

Le produit ainsi obtenu est caractérisé de manière similaire au produit de l'exemple 1. La courbe de l'analyse thermogravimétrique est tracée sur la Figure 2. Les observations faites dans l'exemple 8 restent valables avec une augmentation encore plus marquée de la perte de masse entre 350 et 450 °C et une diminution plus importante de la perte de masse entre 450 et 650 °C. Les résultats des différentes mesures se trouvent dans la dernière colonne du Tableau 3.

De manière générale, le Tableau 3 montre que les proportions de Mg(OH)₂ exprimées par rapport aux proportions de Ca(OH)₂ trouvées d'après les courbes de thermogravimétrie des Figures 1 et 2 sont proches des valeurs attendues. Dans le cas des hydratations par voie sèche (exemples 7 à 9), les proportions réelles sont toutefois légèrement inférieures aux proportions souhaitées. Cet écart peut-être expliqué par une importante formation de vapeur d'eau dans le cas des hydratations par voie sèche, plus importante que dans le cas des hydratation avec excès d'eau des exemples 1 à 6. Certaines fines particules, principalement du Mg(OH)₂ dont la granulométrie est très fine, se retrouvent en suspension dans cette vapeur d'eau et sont extraites de l'hydrateur par le système d'extraction de la vapeur, d'où la 'perte' d'une faible quantité de Mg(OH)₂ pendant la réaction. Logiquement, ces 'pertes' sont moins importantes dans le cas des hydratations avec excès d'eau (exemples 1 à 6) durant lesquelles la température est plus faible et la production de vapeur d'eau moindre et les valeurs réelles sont de ce fait plus proches dans les exemples 1 à 6 des valeurs souhaitées que dans les exemples 7 à 9.

Par ailleurs, il est évident d'après les résultats du Tableau 3 que les hydratations avec excès d'eau (exemples 1 à 6) conduisent à des produits de surface spécifique et de volume poreux élevés alors que les hydratations en voie sèche conduisent à des produits dont la porosité est nettement plus faible. La surface spécifique des produits dépend de la proportion de Mg(OH)₂: plus la proportion de Mg(OH)₂ par rapport à Ca(OH)₂ est élevée et plus la surface spécifique du produit est faible. Les différences sont plus marquées dans le cas des hydratations avec excès d'eau (exemples 1 à 6), dont les produits peuvent être considérés comme des composites ou tout au moins comme des mélanges intimes entre le Mg(OH)₂ initial et une chaux hydratée Ca(OH)₂ de surface spécifique élevée (environ 40 m²/g).

### Exemple comparatif 1

L'exemple 1 est reproduit, mais cette fois, la source de Mg(OH)₂ n°2 qui se présente sous la forme de poudre est utlisée à la place de la source de Mg(OH)₂ n°1 qui se présente quant à elle sous la forme d'un lait. Au lieu de disperser la source de Mg(OH)₂ n°2 dans de l'eau pour préparer un lait comme à l'exemple 6, la source de Mg(OH)₂ n°2 est cette fois mélangée avec la chaux vive, le mélange chaux vive / Mg(OH)₂ étant introduit dans l'hydrateur en lieu et place de la chaux vive et l'hydratation de ce mélange se fait avec de l'eau uniquement.

La chaux vive n°1 est utilisée pour cet exemple et son débit est fixé à 300 g/min. Comme dans l'exemple 1, le débit de Mg(OH)₂ nécessaire à la production d'un produit ayant un rapport Ca/Mg proche de la molarité est alors de 312 g/min. Pour une production totale de 30 minutes, ce sont alors 9000 g de chaux vive et 9360 g de Mg(OH)₂ en poudre qui sont mélangés dans un mélangeur de laboratoire puis introduits dans le doseur servant habituellement à alimenter en chaux vive l'hydrateur de laboratoire. Ce doseur est calibré de manière à introduire dans l'hydrateur 612 g du mélange chaux vive + Mg(OH)₂ par minute. La quantité d'eau à ajouter dans l'hydrateur dans le but d'hydrater totalement CaO et de produire un produit calco-magnésien de haute surface spécifique et haut volume poreux est déterminée de telle sorte que le produit qui sort de l'hydrateur ait une humidité de l'ordre de 15 %.

A la fin de la production, les mêmes étapes de séchage, de désagglomération et les mêmes caractérisations que celles décrites dans l'exemple 1 sont appliquées. D'après les résultats de thermogravimétrie permettant de déterminer les proportions massiques de Ca(OH)₂ et de Mg(OH)₂ dans le produit final, ce produit final après séchage présente un rapport molaire Ca/Mg de 1,21 au lieu du rapport de 1 qui était souhaité. Dans l'exemple 1 ci-dessus, la même hydratation visant à la production d'un produit comparable équimolaire en introduisant Mg(OH)₂ dans l'hydrateur sous la forme d'un lait a pourtant conduit à un produit très proche des attentes dont le rapport molaire Ca/Mg est de 1,01.

En conséquence, il semble que l'introduction dans l'hydrateur de la source de Mg(OH)₂ sous la forme d'un lait soit nettement meilleure que son introduction sous la forme de poudre en mélange avec la chaux vive. D'une part, le mélange de poudres est compliqué à préparer pour en garantir une parfaite homogénéité. D'autre part, lorsque le Mg(OH)₂ arrive déjà sec dans l'hydrateur sous la forme d'une poudre, il est possible que le phénomène décrit ci-dessus se produise : il est en effet envisageable que les fines particules de Mg(OH)₂ en poudre se retrouvent en suspension dans la vapeur d'eau créée par l'hydratation de la chaux vive et soient extraites de l'hydrateur par le système d'extraction de la vapeur d'eau, conduisant ainsi à la 'perte' de Mg(OH)₂. Lorsque Mg(OH)₂ est apporté dans l'hydrateur sous la forme d'un lait, les particules, qui sont aussi fines que dans la poudre de Mg(OH)₂, sont toutefois enrobées d'eau et doivent être séchées avant de se retrouver en suspension dans la vapeur d'eau, ce qui limite les 'pertes' de Mg(OH)₂ par le système d'extraction.

Il est bien entendu que la présente invention n'est en aucune façon limitée aux formes de réalisations décrites ci-dessus et que bien des modifications peuvent y être apportées sans sortir du cadre des revendications annexées.

**Tableau 1.-**

| Chaux vive | n°1 | n°2 |
|---|---|---|
| Taille des particules | < 90µm | <10 mm |
| CaO disponible (% mass.) | 97,29 | 96,92 |
| CaCO₃ (% mass.) | 0,57 | 0,60 |
| MgO (% mass.) | 1,12 | 0,88 |
| Al₂O₃ (% mass.) | 0,18 | 0,22 |
| SiO₂ (% mass.) | 0,25 | 0,67 |
| Fe₂O₃ (% mass.) | 0,18 | 0,20 |
| MnO (% mass.) | 0,04 | 0,00 |
| SO₃ (% mass.) | 0,04 | 0,23 |
| t₆₀ (min.) moyenne sur 3 prélèvements | 0,7 (± 0,05) | 4,2 (± 0,05) |

**Tableau 2.-**

| Source de Mg(OH)₂ | n°1 | n°2 |
|---|---|---|
| Etat initial | suspension 53 % en masse | poudre |
| Mg(OH)₂ (% mass.) | 96,0 | 99,7 |
| CaO (% mass.) | 0,62 | 0,09 |
| Al₂O₃ (% mass.) | 0,10 | 0,06 |
| SiO₂ (% mass.) | 0,11 | 0,03 |
| Fe₂O₃ (% mass.) | 0,37 | 0,01 |
| MnO (% mass.) | 0,07 | 0,00 |
| SO₃ (% mass.) | 0,01 | 0,11 |
| Cl (% mass.) | 0,43 | 0,02 |
| dio (µm) | 0,88 | 1,21 |
| d₅₀ (µm) | 5,04 | 3,93 |
| d₉₀ (µm) | 9,59 | 19,5 |
| surface spécifique (m²/g) | 8,1 | 5,5 - 5,2 |
| volume poreux N₂ | 0,034 | 0,023 - |

**Tableau 3 :**

| **N° ex** | **1** | **2** | **3** | **4** | **5** | **6** | **7** | **8** | **9** |
|---|---|---|---|---|---|---|---|---|---|
| Chaux vive | n°1 | n°1 | n°1 | n°1 | n°1 | n°1 | n°2 | n°2 | n°2 |
| Source Mg(OH)₂ | n°1 | n°1 | n°1 | n°1 | n°1 | n°2 | n°1 | n°1 | n°1 |
| Humidité du produit sortie hydrateur (%) | 16-22 | 22-28 | 16-22 | 16-22 | 16-22 | 16-22 | 1-4 | 1-4 | 1-4 |
| Ca/Mg mol souhaité | 1 | 1 | | | | | | | |
| Ca/Mg mol réel | 1,01 ± 0,02 | 0,97 ± 0,02 | | | | | | | |
| % Mg(OH)₂ par rapport à Ca(OH)₂ souhaité | (78,7) | (78,7) | 5 | 10 | 30 | 30 | 5 | 10 | 30 |
| % Mg(OH)₂ par rapport à Ca(OH)₂ réel | (77,5) | (80,9) | 6,3± 0,5 | 9,7 ± 0,5 | 31,8 ± 0,5 | 29,1 ± 0,5 | 3,6 ± 0,5 | 8,4 ± 0,5 | 29,8 ± 0,5 |
| % Mg(OH)₂ réel dans le produit final (y) | 39,7 ± 0,5 | 40,6 ± 0,5 | 5,4± 0,5 | 8,1 ± 0,5 | 21,9 ± 0,5 | 20,5 ± 0,5 | 3,3 ± 0,5 | 7,4 ± 0,5 | 21,6 ± 0,5 |
| % Ca(OH)₂ réel dans le produit final (x) | 51,2 ± 0,5 | 50,1 ± 0,5 | 86,1 ± 0,5 | 83,3 ± 0,5 | 68,7 ± 0,5 | 70,5 ± 0,5 | 90,8 ± 0,5 | 87,5 ± 0,5 | 72,6 ± 0,5 |
| Somme Ca(OH)₂ + Mg(OH)₂ réels (x + y) | 90,9 ± 0,5 | 90,7 ± 0,5 | 91,5 ± 0,5 | 91,4 ± 0,5 | 90,6 ± 0,5 | 91,0 ± 0,5 | 94,1 ± 0,5 | 94,9 ± 0,5 | 94,2 ± 0,5 |
| Surface spécifique par la méthode BET (m²/g) | 25,0 ± 0,2 | 25,1 ± 0,2 | 41,6 ± 0,2 | 40,4 ± 0,2 | 32,0 ± 0,2 | 31,6 ± 0,2 | 16,5 ± 0,2 | 15,8± 0,2 | 15,1 ± 0,2 |
| Volume des pores 17-1000 À par la méthode BJH (cm³/g) | 0,116 ± 0,020 | 0,145 ± 0,020 | 00,162 ± 0,020 | 0,174 ± 0,020 | 0,150 ± 0,020 | 0,137 ± 0,020 | 0,054 ± 0,020 | 0,056 ± 0,020 | 0,055 ± 0,020 |

## Revendications

1. Procédé de fabrication d'un composé mixte calcique et magnésien comprenant une extinction de chaux vive par un milieu aqueux, avec formation de particules solides,
**caractérisé en ce que** ledit milieu aqueux est une suspension d'hydroxyde de magnésium et **en ce que** ladite extinction est une extinction par voie non-humide formant lesdites particules solides de composé mixte de formule xCa(OH)₂.yMg(OH)₂.zl comprenant une phase calcique et une phase magnésienne intimement liées et de répartition volumique homogène, formule dans laquelle x, y et z sont des fractions pondérales avec x + y compris entre 88 et 100 % en poids par rapport au poids total du composé mixte, et dans laquelle I représente des impuretés.

2. Procédé selon la revendication 1, dans lequel, préalablement à ladite extinction de chaux vive, ladite suspension d'hydroxyde de magnésium est préparée par mise en suspension dans l'eau d'une quantité prédéterminée d'hydroxyde de magnésium comprise entre 1 et 55% en poids, par rapport au poids de ladite suspension d'hydroxyde de magnésium.

3. Procédé selon la revendication 1 ou la revendication 2, dans lequel ladite extinction de chaux vive est réalisée par voie sèche.

4. Procédé selon la revendication 1 ou la revendication 2, dans lequel ladite extinction de chaux vive est réalisée par voie quasi-sèche.

5. Procédé selon la revendication 4, comprenant en outre une étape de séchage desdites particules solides, éventuellement suivie d'une étape de désagglomération.

6. Procédé selon l'une quelconque des revendications 1 à 5, comprenant en outre une étape de coupure granulométrique.

7. Procédé selon l'une quelconque des revendications 1 à 6, dans lequel ladite quantité d'hydroxyde de magnésium est comprise entre 5 et 53 % en poids, de préférence entre 10 et 40 % en poids, en particulier entre 20 et 30 % en poids, par rapport au poids total de la suspension d'hydroxyde de magnésium.

8. Procédé selon l'une quelconque des revendications 1 à 8, dans lequel ledit milieu aqueux comprend en outre un additif choisi dans le groupe des additifs augmentant la surface spécifique des particules de Ca(OH)₂ dudit composé mixte tel que des alcools, des aminés, et analogues.

9. Composé mixte pulvérulent comprenant une phase calcique et une phase magnésienne sous forme solide et pulvérulente **caractérisé en ce qu'**il présente la formule générale xCa(OH)₂.yMg(OH)₂.zl, **en ce que** ladite phase calcique et ladite phase magnésienne sont intimement liées et de répartition volumique homogène, avec des particules de Mg(OH)2 incorporées dans l'hydroxyde de calcium, et **en ce que** x, y et z sont des fractions pondérales où x + y est compris entre 88 et 100 % en poids par rapport au poids total du composé mixte, et où I représente des impuretés.

10. Composé mixte selon la revendication 9, dans lequel la taille des particules d₉₇ est inférieure à 250 µm, de préférence inférieure à 200 µm, avantageusement inférieure à 90 µm et plus particulièrement inférieure à 60 µm.

11. Composé mixte selon l'une quelconque des revendications 9 ou 10, sous la forme d'un hydrate sec présentant une teneur en humidité relative inférieure à 4% en poids, de préférence inférieure à 2% en poids, plus préférentiellement inférieure à 1 % en poids, par rapport au poids total du composé mixte.

12. Composé mixte selon la revendication 11, dans lequel la teneur en Mg(OH)₂ est comprise entre 0,4 et 48 % en poids, de préférence entre 0,5 et 43 % en poids, plus particulièrement entre 0,6 et 40 % en poids, par rapport au poids total du composé et dans lequel la teneur en Ca(OH)₂ est comprise entre 40 et 99,6 % en poids, de préférence entre 45 et 99,5 % en poids, plus particulièrement entre 48 et 99,4 % en poids, par rapport au poids total du composé mixte.

13. Composé mixte selon l'une quelconque des revendications 11 ou 12, présentant une surface spécifique BET comprise entre 5 et 20 m²/g, de préférence supérieure à 10 m²/g et en particulier entre 13 et 17 m²/g.

14. Composé mixte selon l'une quelconque des revendications 11 à 13, présentant un volume poreux BJH compris entre 0,02 et 0,1 cm³/g, de préférence supérieur à 0,03 cm³/g et avantageusement entre 0,04 et 0,07 cm³/g.

15. Composé mixte selon l'une quelconque des revendications 9 ou 10présentant une teneur en humidité entre 15 et 30 % en poids, de préférence supérieure à 17%, ou avantageusement supérieure à19 % en poids par rapport au poids dudit composé mixte, sous la forme d'un hydrate humide et présentant une humidité inférieure à 4%, après séchage.

16. Composé mixte selon la revendication 15, présentant sur base sèche une teneur en Mg(OH)₂ comprise entre 0,8 et 58 % en poids, de préférence entre 0,9 et 53 % en poids, par rapport au poids total du composé et présentant une teneur en Ca(OH)₂ comprise entre 30 et 99,2 % en poids, de préférence entre 35 et 99,1 % en poids, par rapport au poids total du composé mixte.

17. Composé mixte selon l'une quelconque des revendications 15 ou 16, présentant une surface spécifique BET comprise entre 20 et 50 m²/g, de préférence supérieure ou égale à 25 m²/g et avantageusement supérieure ou égale à 30 m²/g, en particulier supérieure ou égale à 35 m²/g.

18. Composé mixte selon l'une quelconque des revendications 15 à 17, présentant un volume poreux BJH compris entre 0,10 et 0,25 cm³/g, de préférence supérieur à 0,11 cm³/g et avantageusement supérieur ou égal à 0,13 cm³/g, en particulier supérieur ou égal à 0,15 cm³/g.

## Patentansprüche

1. Verfahren zur Herstellung einer gemischten Calcium- und Magnesiumverbindung, welches das Löschen von Branntkalk durch ein wässriges Medium, mit Bildung fester Partikel, umfasst,
**dadurch gekennzeichnet, dass** das erwähnte wässrige Medium eine Magnesiumhydroxidsuspension ist, und dadurch, dass das erwähnte Löschen ein Löschen auf nicht feuchtem Wege ist, wodurch die erwähnten festen Partikel der gemischten Verbindung mit der Formel xCa(OH)₂.yMg(OH)₂.zl gebildet werden, welche eine Kalkphase und eine Magnesiumphase mit enger Bindung und homogener Volumenverteilung umfasst, wobei in der Formel x, y und z Gewichtsfraktionen sind, wobei x + y zwischen 88 und 100 Gew.-% in Bezug auf das Gesamtgewicht der gemischten Verbindung beträgt, und wobei I für Verunreinigungen steht.

2. Verfahren nach Anspruch 1, wobei die erwähnte Magnesiumhydroxidsuspension, vor dem erwähnten Löschen von Branntkalk, durch Suspendieren in Wasser einer vorbestimmten Menge von Magnesiumhydroxid, die zwischen 1 und 55 Gew.-%, in Bezug auf das Gewicht der erwähnten Magnesiumhydroxidsuspension beträgt, zubereitet wird.

3. Verfahren nach Anspruch 1 oder Anspruch 2, wobei das erwähnte Löschen von Branntkalk auf trockenem Wege durchgeführt wird.

4. Verfahren nach Anspruch 1 oder Anspruch 2, wobei das erwähnte Löschen von Branntkalk auf fast trockenem Wege durchgeführt wird.

5. Verfahren nach Anspruch 4, welches ferner einen Schritt der Trocknung der erwähnten festen Partikel umfasst, eventuell gefolgt von einem Schritt der Deagglomeration.

6. Verfahren nach irgendeinem der Ansprüche 1 bis 5, welches ferner einen Schritt der Kornfraktionierung umfasst.

7. Verfahren nach irgendeinem der Ansprüche 1 bis 6, wobei die erwähnte Menge an Magnesiumhydroxid zwischen 5 und 53 Gew.-% beträgt, bevorzugt zwischen 10 und 40 Gew.-%, insbesondere zwischen 20 und 30 Gew.-%, in Bezug auf das Gesamtgewicht der Magnesiumhydroxidsuspension.

8. Verfahren nach irgendeinem der Ansprüche 1 bis 8, wobei das erwähnte wässrige Medium ferner einen Zusatz umfasst, ausgewählt aus der Gruppe der Zusätze, welche die spezifische Oberfläche der Ca(OH)₂-Partikel der erwähnten gemischten Verbindung vergrößern, wie zum Beispiel Alkohole, Amine und Analoga.

9. Pulverförmige gemischte Verbindung, welche eine Kalkphase und eine Magnesiumphase in fester und pulverförmiger Form umfasst, **dadurch gekennzeichnet, dass** sie die allgemeine Formel xCa(OH)₂.yMg(OH)₂.zl aufweist, und dadurch, dass die erwähnte Kalkphase und die erwähnte Magnesiumphase eng gebunden und mit homogener Volumenverteilung sind, mit Mg(OH)₂-Partikeln, welche im Calciumhydroxid inkorporiert sind, und dadurch, dass x, y und z Gewichtsfraktionen sind, wobei x + y zwischen 88 und 100 Gew.-% in Bezug auf das Gesamtgewicht der gemischten Verbindung beträgt, und wobei I für Verunreinigungen steht.

10. Gemischte Verbindung nach Anspruch 9, wobei die Partikelgröße d₉₇ geringer ist als 250 µm, bevorzugt geringer als 200 µm, vorteilhafterweise geringer als 90 µm und genauer gesagt geringer als 60 µm.

11. Gemischte Verbindung nach irgendeinem der Ansprüche 9 oder 10, in Form eines Trockenhydrats, welches einen relativen Feuchtigkeitsgehalt von weniger als 4 Gew.-% aufweist, bevorzugt weniger als 2 Gew.-%, am besten weniger als 1 Gew.-%, in Bezug auf das Gesamtgewicht der gemischten Verbindung.

12. Gemischte Verbindung nach Anspruch 11, wobei der Gehalt an Mg(OH)₂ zwischen 0,4 und 48 Gew.-% beträgt, bevorzugt zwischen 0,5 und 43 Gew.-%, genauer gesagt zwischen 0,6 und 40 Gew.-%, in Bezug auf das Gesamtgewicht der Verbindung, und wobei der Gehalt an Ca(OH)₂ zwischen 40 und 99,6 Gew.-% beträgt, bevorzugt zwischen 45 und 99,5 Gew.-%, genauer gesagt zwischen 48 und 99,4 Gew.-%, in Bezug auf das Gesamtgewicht der gemischten Verbindung.

13. Gemischte Verbindung nach irgendeinem der Ansprüche 11 oder 12, welche eine spezifische Oberfläche BET von zwischen 5 und 20 m²/g aufweist, bevorzugt mehr als 10 m²/g und insbesondere zwischen 13 und 17 m²/g.

14. Gemischte Verbindung nach irgendeinem der Ansprüche 11 bis 13, welche ein Porenvolumen BJH von zwischen 0,02 und 0,1 cm³/g aufweist, bevorzugt mehr als 0,03 cm³/g und vorteilhafterweise zwischen 0,04 und 0,07 cm³/g.

15. Gemischte Verbindung nach irgendeinem der Ansprüche 9 oder 10, welche einen Feuchtigkeitsgehalt zwischen 15 und 30 Gew.-% aufweist, bevorzugt mehr als 17 Gew.-%, oder vorteilhafterweise mehr als 19 Gew.-% in Bezug auf das Gewicht der erwähnten gemischten Verbindung, in Form eines Feuchthydrats und mit einer Feuchtigkeit von weniger als 4 %, nach Trocknen.

16. Gemischte Verbindung nach Anspruch 15, welche auf Trockenbasis einen Gehalt an Mg(OH)₂ von zwischen 0,8 und 58 Gew.-% aufweist, bevorzugt zwischen 0,9 und 53 Gew.-%, in Bezug auf das Gesamtgewicht der Verbindung, und welche einen Gehalt an Ca(OH)₂ von zwischen 30 und 99,2 Gew.-% aufweist, bevorzugt zwischen 35 und 99,1 Gew.-%, in Bezug auf das Gesamtgewicht der gemischten Verbindung.

17. Gemischte Verbindung nach irgendeinem der Ansprüche 15 oder 16, welche eine spezifische Oberfläche BET von zwischen 20 und 50 m²/g aufweist, bevorzugt mehr als oder gleich 25 m²/g und vorteilhafterweise mehr als oder gleich 30 m²/g, insbesondere mehr als oder gleich 35 m²/g.

18. Gemischte Verbindung nach irgendeinem der Ansprüche 15 bis 17, welche ein Porenvolumen BJH von zwischen 0,10 und 0,25 cm³/g aufweist, bevorzugt mehr als 0,11 cm³/g und vorteilhafterweise mehr als oder gleich 0,13 cm³/g, insbesondere mehr als oder gleich 0,15 cm³/g.

## Claims

1. Process for manufacturing a mixed calcium and magnesium compound, comprising slaking of quicklime with an aqueous medium and the formation of solid particles
**characterized in that** said aqueous medium is a suspension of magnesium hydroxide, and **in that** said slaking is non-wet slaking to form said solid particles of mixed compound of formula xCa(OH)₂.yMg(OH)₂.zl comprising a closely bound calcium phase and magnesium phase having homogeneous volume distribution, a formula where x, y and z are weight fractions with x + y between 88 and 100 % by weight relative to the total weight of the mixed compound, and where I represents impurities.

2. The process according to claim 1 wherein, prior to said slaking of quicklime, said suspension of magnesium hydroxide is prepared by placing in suspension in water a predetermined amount of magnesium hydroxide of between 1 and 55 % by weight relative to the weight of said suspension of magnesium hydroxide.

3. The process according to claim 1 or 2, wherein said slaking of quicklime is performed by dry slaking.

4. The process according to claim 1 or 2, wherein said slaking of quicklime is performed by near-dry slaking.

5. The process according to claim 4 further comprising a step to dry said solid particles, optionally followed by a deagglomerating step.

6. The process according to any of claims 1 to 5, further comprising a particle size screening step.

7. The process according to any of claims 1 to 6, wherein said amount of magnesium hydroxide is between 5 and 53% by weight, preferably between 10 and 40 % by weight, in particular between 20 and 30 % by weight relative to the total weight of the suspension of magnesium hydroxide.

8. The process according to any of claims 1 to 8, wherein said aqueous medium further comprises an additive selected from the group of additives increasing the specific surface area of the Ca(OH)₂ particles of said mixed compound, such as alcohols, amines and the like.

9. Powdery mixed compound comprising a calcium phase and a magnesium phase in solid powder form, **characterized in that** it has the general formula xCa(OH)₂.yMg(OH)₂.zl, **in that** said calcium phase and said magnesium phase are closely bound having homogeneous volume distribution with particles of Mg(OH)₂ incorporated in the calcium hydroxide, and **in that** x, y and z are weight fractions where x + y is between 88 and 100 % by weight relative to the total weight of the mixed compound and where I represents impurities.

10. The mixed compound according to claim 9, wherein the particle size d₉₇ is smaller than 250 µm, preferably smaller than 200 µm, advantageously smaller than 90 µm and more particularly smaller than 60 µm.

11. The mixed compound according to any of claims 9 or 10, in the form of a dry hydrate having a relative humidity content lower than 4 % by weight, preferably lower than 2 % by weight, more preferably lower than 1 % by weight, relative to the total weight of the mixed compound.

12. The mixed compound according to claim 11, wherein the content of Mg(OH)₂ is between 0.4 and 48 %by weight, preferably between 0.5 and 43 % by weight, more particularly between 0.6 and 40 % by weight relative to the total weight of the compound, and wherein the content of Ca(OH)₂ is between 40 and 99.6 % by weight, preferably between 45 and 99.5 % by weight, more particularly between 48 and 99.4 % by weight relative to the total weight of the mixed compound.

13. The mixed compound according to any of claims 11 or 12,having a BET specific surface area of between 5 and 20 m²/g, preferably higher than 10 m²/g and in particular between 13 and 17 m²/g.

14. The mixed compound according to any of claims 11 to 13, having a BJH pore volume of between 0.02 and 0.1 cm³/g, preferably higher than 0.03 cm³/g and advantageously between 0.04 and 0.07 cm³/g.

15. The mixed compound according to any of claims 9 or 10, having a humidity content of between 15 and 30 % by weight, preferably higher than 17 %, or advantageously higher than 19 % by weight relative to the weight of said mixed compound, in the form of a wet hydrate, and having humidity lower than 4 % after drying.

16. The mixed compound according to claim 15, on a dry basis, having a Mg(OH)₂ content of between 0.8 and 58 % by weight, preferably between 0.9 and 53 % by weight relative to the total weight of the compound, and having a Ca(OH)₂ content of between 30 and 99.2 % by weight, preferably between 35 and 99.1 % by weight relative to the total weight of the mixed compound.

17. The mixed compound according to any of claims 15 or 16 having a BET specific surface area of between 20 and 50 m²/g preferably equal to or higher than 25 m²/g and advantageously equal to or higher than 30 m²/g, in particular equal to or higher than 35 m²/g.

18. The mixed compound according to any of claims 15 to 17, having a BJH pore volume of between 0.10 and 0.25 cm³/g, preferably higher than 0.11 cm³/g and advantageously equal to or higher than 0.13 cm³/g, in particular equal to or higher than 0.15 cm³/g.
